# EUROPEAN PATENT APPLICATION

(11) **EP 2 647 615 A1**
(43) Date of publication of application: **09.10.2013**
(21) Application number: 13162191.4
(22) Date of filing: 03.04.2013
(51) Int. Cl.: C05F 17/02

(54) **Composting device**

(30) Priority: 03.04.2012 US 201261619569 P; 03.05.2012 US 201261641942 P; 28.03.2013 US 201313852219
(71) Applicant: Whirlpool Corporation, Benton Harbor, MI 49022 (US)
(72) Inventor: Berberet, Suzanne M., Benton Harbor, MI 49022 (US); Blanchard, Walter T., Benton Harbor, MI 49022 (US); Burgess, Brent M., Benton Harbor, MI 49022 (US); Delgado, Kristopher L., Benton Harbor, MI 49022 (US); Dibkey, Brett, Benton Harbor, MI 49022 (US); Habegger, Donald J., Benton Harbor, MI 49022 (US); Kasprowicz, Andrew, Benton Harbor, MI 49022 (US); Mann, Earl W., Benton Harbor, MI 49022 (US); Murch, William L., Benton Harbor, MI 49022 (US); Park, Jack F., Benton Harbor, MI 49022 (US); Sonnenberg, Wesley A., Benton Harbor, MI 49022 (US)
(74) Representative: Nicholls, Michael John

(57) **Abstract**

The invention relates to a device for transforming refuse into compost. The device includes a first chamber having a grinding mechanism to grind refuse. The device also includes a second chamber attached to the first chamber, and a conduit interconnecting the first chamber to the second chamber. The second chamber stores the ground refuse to promote the composting process, and the conduit allows thermal energy and moisture to be shared between the first and second chambers.

## Description

The invention relates to a compost device. More particularly, the invention relates to a compost device having a first chamber configured to grind refuse into particles and a second chamber configured to hold the ground refuse to facilitate curing operations.

Compost devices are currently known and used. Residential compost devices are relatively small and configured to fit within the living spaces of a domestic user such as the kitchen or garage. However, current residential compost assemblies are limited in that they do not facilitate the curing process and the composting process in general.

As is known by those skilled in the art, compost is formed when refuse comprising organic matter has been decomposed to a state suitable to provide nutrients for farming. The decomposition process may take a few months. The decomposition process may be accelerated by adding chemicals or bacteria to the ground refuse, however such an addition may still require months to produce usable compost. Unfortunately, refuse may still be collected as the ground refuse is piling up. This may present a problem in residences where users have limited outdoor space to store the refuse. Thus, it remains desirable to further accelerate the composting so as to prevent the pileup of refuse which may hinder use of current composting devices. For instance, residents residing in urban areas may not have a backyard in which the refuse may be stored during the composting process.

Further, current composting devices do not have features which facilitate the cleansing of the device itself. Thus without user action ground refuse may stick to the crevices and parts within the device causing an unpleasant odor to emanate from the device. Further, current compost devices require the user to handle the refuse as it is introduced into the composting chamber. It further remains desirable to have a composting device having features operable to facilitate and maintain the cleanliness of the device so as to reduce odor emanating from the device. It further remains desirable to have a composting device having a mechanism operable to facilitate the introduction of refuse into the device wherein the user direct handling and manipulation of the refuse is minimized.

Further current residential composting devices are typically manually operated and are not configured to adjust the operating cycle based upon the content of the refuse. Thus, the composting process remains the same despite the fact that the compost itself may be formed of different types of refuse. Accordingly, it remains desirable to have a composting device operable to adjust its operating parameters based upon the type of refuse being composted.

According to one aspect of the invention a device for transforming refuse into compost is provided. The device includes a first chamber, which may include a grinding mechanism. The grinding mechanism is configured to grind the refuse into small parts so as to facilitate and expose the refuse surfaces to aeration. It is known by those skilled in the art that exposure to aeration expedites the composting process.

A second chamber is attached to the first chamber. The second chamber is configured to store the ground refuse and provide a space optimal to cure the ground refuse into compost. Ground refuse from the first chamber is dispensed into the second chamber. A conduit interconnects the first second chambers, so as to share thermal energy and moisture between the first and second chambers.
In more detail the invention provides a device for transforming refuse into compost, the device comprising: a first chamber having a grinding mechanism operable to grind the refuse; a second chamber attached to the first chamber, the second chamber storing the ground refuse so as to promote the composting process; and a conduit interconnecting the first chamber to the second chamber, so as to share thermal energy and moisture between the first and second chamber. The second chamber may be disposed beneath the first chamber. The device may further comprise: a flash steamer, the flash steamer operable to flash steam the refuse prior to actuation of the grinding mechanism; a blower, the blower operable to blow air and thermal energy from the first chamber to the second chamber; or a manifold disposed on a bottom floor of the second chamber, the manifold in fluid communication with the conduit, the manifold having at least one vent operable to pass air and thermal energy through the ground refuse. The conduit may be connected to a bottom surface of the second chamber or a side wall of the second chamber. The device may further include an outlet and a filter, the outlet disposed on the second chamber operable to release air and thermal energy from the second chamber to the environment, the filter mounted to the outlet so as to filter the air and thermal energy released into the environment. The filter may include a first substrate and a second substrate, the first substrate is exposed to the inner space of the second chamber, and the second substrate exposed to the environment, and the device optionally further includes a blower operatively connected to the conduit and upstream the filter, the blower operable to urge air and thermal energy from both the first and second chamber through the filter and out to the environment. The first substrate may be formed of a material operable to filter odors emanating from the second chamber, the second substrate operable to release a fragrance into the environment. The device may further include a processor and a sensor, the sensor operable to detect a plurality of environmental conditions of the first and second chambers, the sensor in communication with the processor and sending a signal to the processor, the processor processing the signal from the sensor so as to actuate the blower when a predetermined environmental condition is detected within either the first or second chambers. The blower may be configured to blow air at a variable rate, the processor operable to adjust the rate of air flow based upon the signal provided by the sensor, and wherein the sensor is optionally a plurality of sensors operable to detect at least one of the plurality of environmental conditions, wherein the plurality of environmental conditions include an amount of ground refuse contained within the device, an amount of moisture within the device, and a temperature within the device. The first chamber may further include a front wall, a back wall, and a shearing device, the shearing device having a first cutting member rotatable about a third axis, and a second cutting member fixedly mounted to one of either the first, second, front or back walls of the first chamber, the second cutting member having a sliding surface exposed to the respective one of the first, second, front or back wall of the first chamber, the first cutting member configured to slidingly engage the sliding surface of the second cutting member upon rotation about the third axis. The device may further include a cleaning mechanism, the cleaning mechanism disposed in the first chamber, the cleaning mechanism operable to facilitate the removal of refuse from the grinding mechanism. The device may further include a distributing mechanism, the distributing mechanism disposed in the first chamber, the distributing mechanism operable to introduce a composting accelerant onto the refuse to facilitate the composting process. The distributing mechanism may include a second cartridge containing the compost accelerant, a pump operable to eject the compost accelerant from the second cartridge. The compost accelerant may include enzymes, probiotics and bacteria operable to facilitate the transformation of the refuse into compost. The device may further include a dispensing mechanism operable to dispense a curing agent into the second chamber. The device may further include a sensor operable to detect an introduction of ground refuse into the second chamber and a processor in communication with the sensor, the processor actuating the dispensing mechanism when the sensor detects the introduction of ground refuse into the second chamber. The device may further include an agitator disposed in the second chamber, the agitator operable to stir the ground refuse so as to facilitate aeration of the ground refuse and the compost process. The device may further include a plurality of curing containers disposed within the second chamber, each of the plurality of curing containers movable to a ready position wherein the curing container is positioned to receive ground refuse. Each of the plurality of curing containers may be removably disposed within the second chamber. The device may further include a storage container having a storage space configured to hold a discrete amount of refuse, the first chamber including an opening, the storage container configured to fittingly mount onto the opening of the first chamber.
Another aspect of the invention provides a device for transforming refuse into compost, the device comprising: a first chamber having a shearing device operable to break up the refuse; a second chamber attached to the first chamber, the second chamber storing the refuse so as to promote the composting process; and a conduit interconnecting the first chamber to the second chamber, so as to share thermal energy and moisture between the first and second chamber.

The invention will be further described by way of examples with reference to the accompanying drawings wherein:

Figure 1 is a perspective view of the device;

Figure 2 is a perspective view of the device showing the curing containers;

Figure 3 is a cross-sectional view of the device of figure 1 taken along lines 3-3;

Figure 4 is a view of figure 3 showing a manifold;

Figure 5 is a perspective view of an embodiment of the grinding mechanism;

Figure 6 is a cross-sectional view of the device of figure 3 taken along lines 6-6, showing a top down view of the shearing mechanism;

Figure 7 is a cross-sectional view of the second chamber showing an embodiment of the agitator;

Figure 8 is a top down view of the agitator of Figure 7;

Figure 9 is a cross-sectional view of the second chamber showing another embodiment of the agitator;

Figure 10 is a cross-sectional view of an embodiment of the storage container;

Figure 11 is a cross-sectional view of the storage container of figure 12 taken along lines 11-11;

Figure 12 is a perspective view of the storage container of Figure 11 being mounted on to the device;

Figure 13 is a cross-sectional view of yet another embodiment of the storage container showing the rotatable door;

Figure 14 is a perspective view of an embodiment of the storage container;

Figure 15 is a view of the storage container of Figure 14 showing the bottom floor opening; and

Figure 16 is a view showing the baffles mounted to the inner wall of the first chamber.

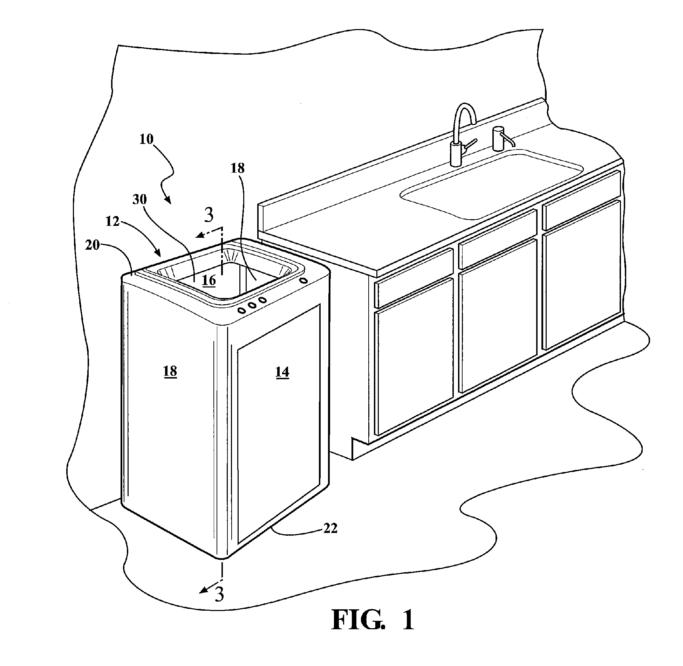

With reference first to Figures 1-3, a device **10** for transforming refuse into compost is provided. The device **10** includes a housing **12** having a front wall **14** spaced apart a back wall **16,** and a pair of side walls **18** extending between the front and back walls **14, 16.** The housing **12** also includes a top wall **20** opposite a bottom wall **22.** The housing **12** may be formed of a rigid and durable material such as steel, a metal alloy, or a hardened polymer composite material.

A first chamber **24** and a second chamber **26** are disposed within the housing **12.** The first chamber **24** may include a bottom floor **28** spaced apart the top wall **20** and the bottom wall **22.** The bottom floor **28** extends between the side, front and back walls **18, 14, 16** so as to enclose the first chamber **24.**

The top portion of the first chamber **24** is enclosed by the top wall **20** of the device **10** and may include a first opening **30** for receiving refuse. The inner surfaces of the side walls **18,** and front and back walls **14, 16** may be formed of or coated with a slick material such as stainless steel to help reduce the occurrence of refuse adhering to the inner surfaces of the first chamber **24.** The first chamber **24** is configured to perform what is commonly referred to by those skilled in the art as an active composting process wherein refuse is primarily mechanically reduced to a plurality of small particulates. Thus, the ground refuse has a larger surface area which promotes the introduction of moisture and the aeration so as to help the decomposition process and transform the ground refuse into compost.

The second chamber **26** is connected to the first chamber **24** so as to allow ground refuse to be transported from the first chamber **24** to the second chamber **26.** Preferably, the second chamber **26** is disposed beneath the first chamber **24** so as to allow gravity to assist with the deposition of ground refuse into the second chamber **26.** In such an embodiment, the second chamber **26** may be enclosed by the bottom floor **28** of the first chamber **24** and the bottom wall **22** of the housing **12.** The bottom floor **28** may include a partition **34.** The partition **34** may be manually or automatically actuated so as to displace itself leaving an opening for which ground refuse may fall into the second chamber **26.**

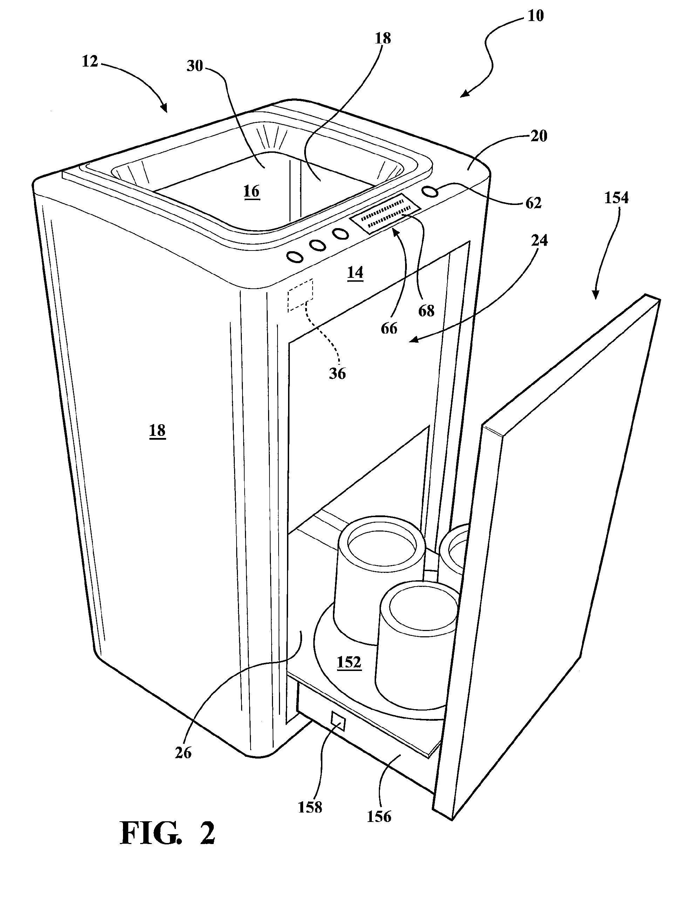

In a manual operation, the user may pull a lever or push one of the buttons on an outer surface of the housing **12,** as seen in Figures 1 and 2, which displaces the partition **34** allowing the ground refuse to fall into the second chamber **26.** In cases where the partition **34** is automatically actuated, a processor **36** may determine when grinding operations are complete and displace the partition **34.**

The inner surfaces of the side walls **18,** and the front and back walls **14, 16** may be formed of or coated with a slick material such as stainless steel to help reduce the occurrence of ground refuse adhering to the inner surfaces **32.** The second chamber **26** is configured to provide a curing environment wherein the ground up refuse is no longer reduced in size through mechanical means but where mesophilic bacteria reaction of the refuse is operable to transform the ground refuse into compost suitable for use in farming.

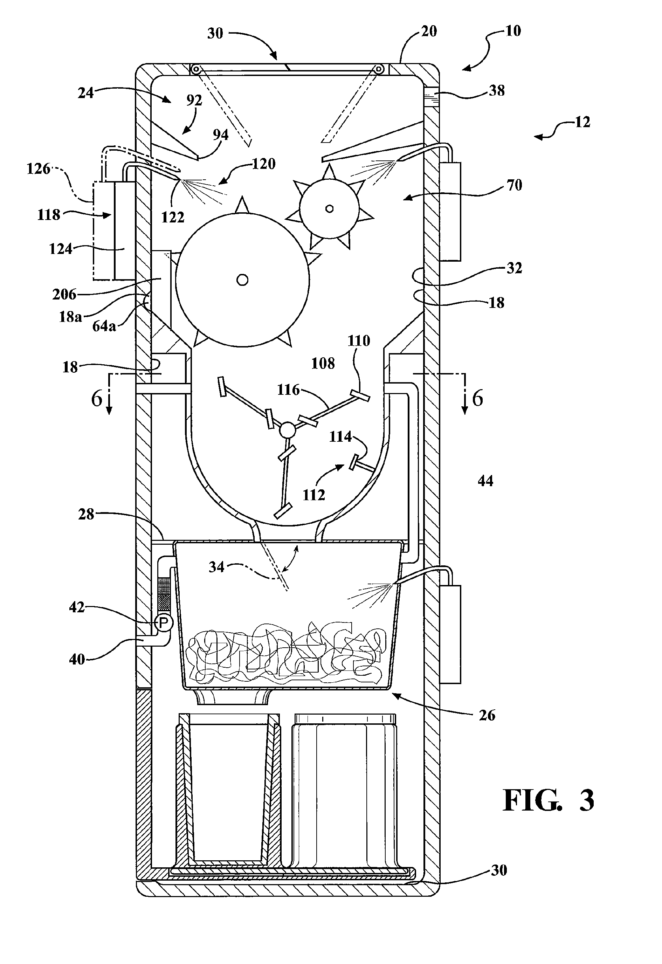

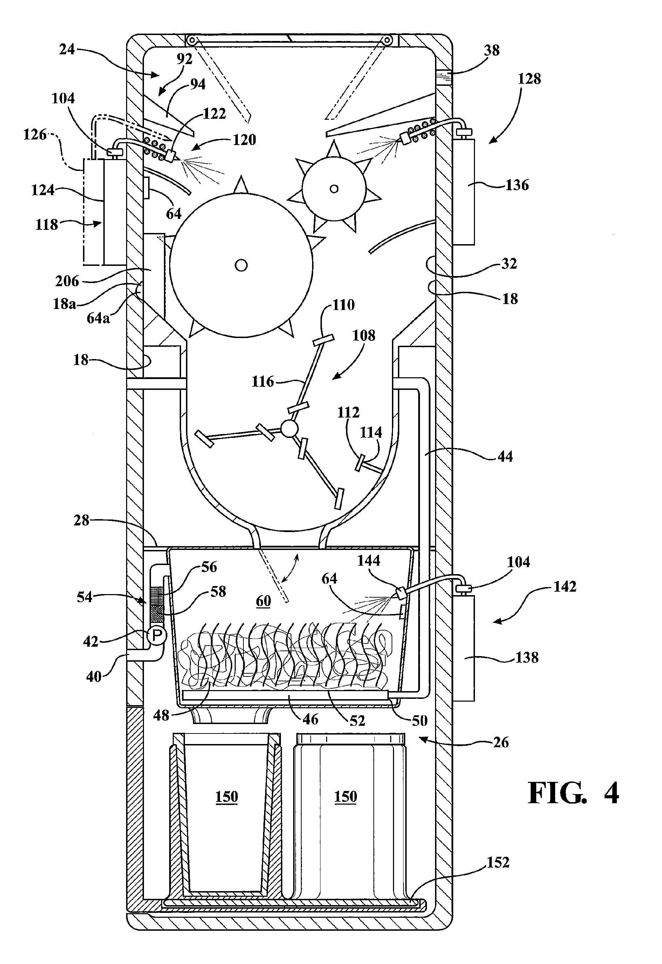

With reference again to Figure 3, and now to Figure 4, the device **10** may further include a fresh air intake **38** and an outtake **40.** The fresh air intake **38** is in fluid communication with the environment. A blower **42** is operable to draw fresh air from the environment into the first chamber **24.** A conduit **44** interconnects the first chamber **24** to the second chamber **26** so as to allow fluids to move therebetween. The conduit **44** may be removably attached to the first and second chamber **24, 26** or may be integrally formed thereto.

The conduit **44** and the blower **42** allow for the exchange of fluid resources between the first and second chambers **24, 26.** Specifically, moisture found in the air may be transmitted from the first chamber **24** down to the second chamber **26.** Likewise heat may be transferred and shared between the first and second chambers **24, 26** to optimize the active composting and curing process. The blower **42** is further operable to eject unwanted heat or moisture in the first and second chambers **24, 26** into the environment through the outtake **40.**

With reference again to Figure 4, the composting device **10** may further include a manifold **46** having a plurality of vents **48.** The manifold **46** may further include a manifold intake **50** configured to engage the conduit **44.** The conduit **44** may be formed of a rigid and durable material such as steel or a composite polymer. In such an embodiment, the conduit **44** is connected to a bottom inner surface **32** of the second chamber **26.** The manifold **46** is disposed on the bottom inner surface **32** of the second chamber **26.** The manifold **46** includes a support surface **52** for holding ground refuse undergoing the curing process. The vents **48** are dimensioned and configured to support the ground refuse and prevent the ground up refuse from falling through the vents **48.** The manifold **46** may be formed as a separate unit so as to allow the user to remove the manifold **46** for cleaning, or may be integrated into the second chamber **26.**

The blower **42** is operable to introduce air and moisture from the first chamber **24** into the second chamber **26.** The blower **42** pushes air from the bottom portion of the second chamber **26** through the manifold **46.** Specifically, air is pushed from the fresh air intake **38** through each of the plurality of vents **48.** The air and moisture rise upwardly through the ground refuse held in the second chamber **26** and towards the first chamber **24.** Thus moisture and heat from the first chamber **24** permeate through the ground refuse. The air may be recirculated or ejected through the outtake **40.**

Alternatively the conduit **44** may be attached to a side wall **18** of the second chamber **26.** The blower **42** draws air from the side wall **18** of the second chamber **26** through the outtake **40.** The air is thus pulled over a top surface of ground refuse wherein moisture and temperature from the first chamber **24** are shared to particulates of ground refuse found near the top surface of the second chamber **26.**

With reference again to Figures 3 and 4, the device **10** may further include a filter **54.** The fresh air intake **38** is operatively connected to the first chamber **24** and is generally open to the environment. The outtake **40** is operatively connected to the second chamber **26.** Air from the fresh air intake **38** is filtered through the filter **54** and drawn out the outtake **40.**

The filter **54** is operable to capture odor emanating from within the first and second chambers **24, 26** and deliver a pleasant fragrance to the environment through the outtake **40.** The filter **54** may include a first substrate **56** and a second substrate **58.** The first substrate **56** is exposed to the inner space **60** of the second chamber **26** and the second substrate **58** is exposed to the environment. The first substrate **56** is formed of a material operable to filter odors such as charcoal. The second substrate **58** is operable to release a fragrance into the environment.

The blower **42** may be automated. A processor **36** receives information from a plurality of sensors **64** so as to actuate the blower **42** to optimize the composting process based upon the environmental conditions of the first and second chambers **24, 26.** In particular, the composting process may be accelerated based upon the amount of moisture, or heat during the active composting process or the curing process. Sensors **64** operative to detect moisture and heat are currently known and used in the art, any such sensor **64** may be adapted for use herein, illustratively including a thermistor, thermocouple, conductivity sensor, capacitive or resistive humidity sensor, and/or thermal conductivity sensor.

For instance, a sensor **64** may be disposed within both or either of the first and second chambers **24, 26.** The sensor **64** may be operable to detect the environmental condition of the first and second chambers **24, 26.** The sensor **64** is in communication with the processor **36** and transmits the environmental condition of the respective first or second chamber **24, 26** to the processor **36.** The processor **36** processes the environmental condition of the respective first or second chamber **24, 26,** or in instances where sensors **64** are placed in both, of both the first and second chamber **24, 26.** The processor **36** calculates a desired operating mode of the blower **42** which is optimal for the detected environmental conditions.

In one example the processor **36** processes the environmental conditions of a sensor **64** in the first chamber **24** and the environmental conditions of a sensor **64** in the second chamber **26** to actuate the blower **42.** For example, in instances where a sensor **64** detects there is a relatively sufficient amount of moisture or heat in the first chamber **24** and another sensor **64** detects there is a sufficient amount of moisture or heat in the second chamber **26,** the processor **36** actuates the blower **42** so as to direct moisture and thermal energy from the first chamber **24** to the second chamber **26** through the conduit **44.**

It should also be appreciated that the blower **42** may be configured to blow air at a variable rate and the processor **36** is operable to adjust the rate of air flow based upon the environmental condition provided by the sensor **64.** The processor **36** may actuate the blower **42** based upon other factors as well. For instance, the device **10** may include an input **62** operable to provide the processor **36** with the type of refuse being composted. A display **66** may provide the user with a menu **68.** The menu **68** may include a list of different types of refuse from which the user may choose. Thus, the processor **36** may actuate the blower **42** so as to create a composting environment optimal for the type of refuse being composted. Thus, in instances where the refuse is comprised primarily of meat, the blower **42** may direct more moisture and heat to the second chamber **26.**

The device **10** may include a plurality of sensors **64** operable to detect numerous environmental conditions wherein the plurality of conditions include the amount of ground refuse contained within the second chamber **26,** the amount of moisture within the first and second chambers **24, 26,** and the temperature within the first and second chambers **24, 26.**

The device **10** includes a grinding mechanism **70** disposed in the first chamber **24.** The grinding mechanism **70** is configured to grind the refuse into small parts so as to facilitate and expose the refuse to aeration, thus facilitating the composting process. The grinding mechanism **70** is operable to reduce the size of refuse into a uniform particle in size and dimension so as to optimize the ground refuse for aeration and facilitate the composting process. The grinding mechanism **70** is formed of a durable and rigid material such as steel or a steel composite.

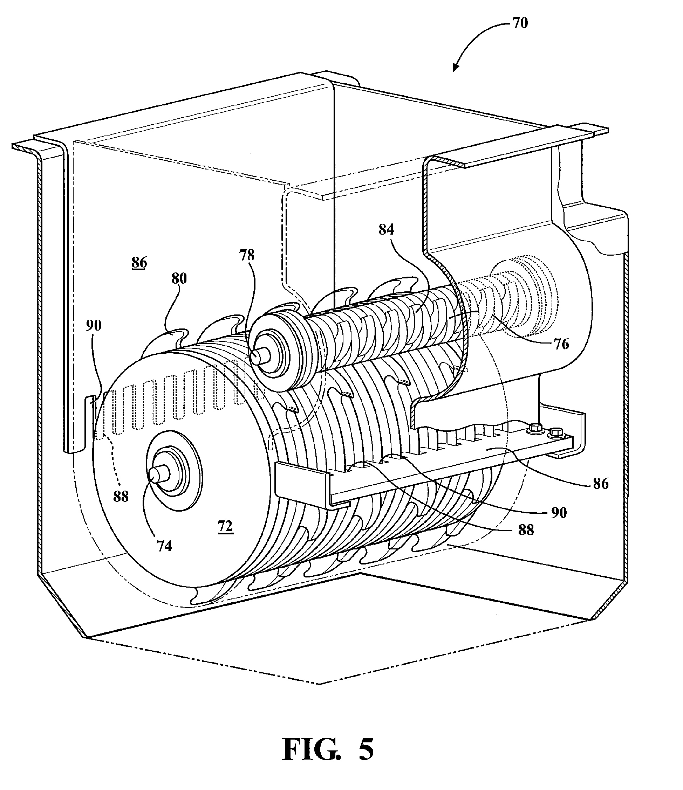

With reference now to Figure 5, an embodiment of the grinding mechanism **70** is provided. The grinding mechanism **70** may include a first grinding wheel **72** mounted to a first shaft **74.** The first shaft **74** is rotatable about a first axis. A second grinding wheel **76** is mounted to a second shaft **78.** The second shaft **78** is rotatable about a second axis. The first and second axes are generally parallel to each other and spaced apart from each other. The grinding mechanism **70** extends longitudinally between the front and back walls **14, 16** of the first chamber **24** so as to place the first and second axes generally parallel with respect to the side walls **18** of the first chamber **24.** The first and second axes are angled relative to each other with respect to a plane extending along the horizon. In other words, the first axis is above and generally offset radially from the second axis.

The first grinding wheel **72** has a first diameter and the second grinding wheel **76** has a second diameter. The first diameter is greater than the second diameter. Thus, the first grinding wheel **72** is larger in circumference than the second grinding wheel **76.** The first grinding wheel **72** is disposed above the second grinding wheel **76** and adjacent the side wall **18** relative to the second grinding wheel **76.**

The first grinding wheel **72** includes a plurality of first teeth **80** extending outwardly beyond an outer surface **82** of the first grinding wheel **72.** The second grinding wheel **76** includes a plurality of second teeth **84** which also extend outwardly beyond an outer surface **82** of the second grinding wheel **76.** The first and the second grinding wheels **72, 76** are spaced apart so as to place respective first and second teeth **80, 84** in sliding communication with the outer surface **82** of the respective first and second grinding wheels **72, 76.** Accordingly, the grinding mechanism **70** is configured to grind refuse between the first and second grinding wheels **72, 76.**

The grinding wheels **72, 76** are operable to rotate opposite each other so as to feed and introduce refuse between the first and second teeth **80, 84.** It should be appreciated that in instances where the ground refuse is stuck between the grinding wheels **72, 76,** the grinding wheels **72, 76** may be rotated in an opposite direction so as to eject the refuse.

The device **10** may further include a comb **86** having a plurality of comb teeth **88.** The comb **86** may be disposed on the side wall **18.** Each of the comb teeth **88** is spaced apart from the other and the second teeth **84** of the second grinding wheel **76** are configured to slide between each of the respective comb teeth **88** upon rotation of the grinding wheel so as to grind refuse therebetween. The comb **86** is further operable to prevent refuse from being stuck to a side wall **18** of the first chamber **24.**

With reference again to Figure 5, the comb **86** is shown mounted to one of the side walls **18.** The comb **86** may be integrally formed to the side wall **18,** or attached thereto. The comb **86** extends inwardly from the side wall **18** to the inner spaces **60** of the first chamber **24** along a plane generally parallel to the horizon. The comb teeth **88** extend from an inner surface **32** of the first chamber **24** toward the middle portion of the first chamber **24.** The comb **86** may be removable so as to help facilitate cleaning the device **10.**

The device **10** may include a pair of combs **86,** one on each of the side walls **18.** The combs **86** are operable to prevent refuse from passing through the spaces **90** between the second grinding wheel **76** and the side walls **18** so as to facilitate the introduction of refuse into the second chamber **26** through the process of being ground between the first and second grinding wheels **72, 76.** The combs **86** are disposed within the first chamber **24** so as to position the comb teeth **88** to pass between the spaces **90** of respective first and second teeth **80, 84.** Thus, one of the combs **86** is positioned along a plane which is generally parallel to the side wall **18.** The comb teeth **88** are positioned to cooperate with the first teeth **80** of the first grinding wheel **72.**

With reference again to Figures 3 and 4, a stopper **92** may be formed or disposed on the side wall **18.** The stopper **92** includes a plurality of stopping members **94** projecting outwardly and angularly from the side wall **18** towards the first grinding wheel **72** and second grinding wheel **76.** Each stopping member **94** is configured to fit within the spaces between respective first and second teeth **80, 84.** The stopping members **94** are operable to prevent refuse from being introduced into the space **90** between the second grinding wheel **76** and the side wall **18.** The stopper **92** further ensures that refuse is introduced into the second chamber **26** between the first and second grinding wheels **72, 76.**

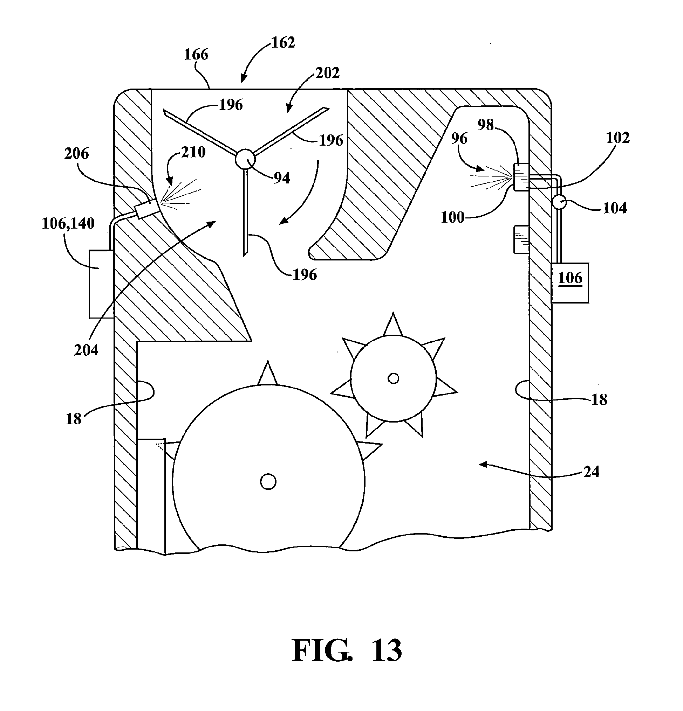

With reference again to Figures 3 and 4, and now to Figure 13, the device **10** may further include a tenderizing device **96** operable to tenderize the refuse to facilitate grinding operations. The tenderizing device **96** may be a flash steamer **98.** The flash steamer **98** is operable to flash steam the refuse prior to actuation of the grinding mechanism **70.** The flash steamer **98** is operatively connected to the first chamber **24.** The flash steamer **98** may include a vaporizer **100** having a heating element **102** and a pump **104.** A water source **106** is connected to the flash steamer **98.** The pump **104** is operable to eject water from the water source **106** through the vaporizer **100** wherein the heating element **102** heats the vaporized liquid to a predetermined temperature. Specifically, the vaporized liquid creates what is commonly referenced as flash steam environment wherein refuse is partially cooked. The partially cooked refuse is also infused with steam and thus is made more tender and may be ground up more easily relative to refuse which has not been flash steamed.

It should be appreciated by those skilled in the art that other tenderizing devices **96** may be adapted and used herein, illustratively including a microwave emitter, convection heater, infrared lamp, and/or resistive heater.

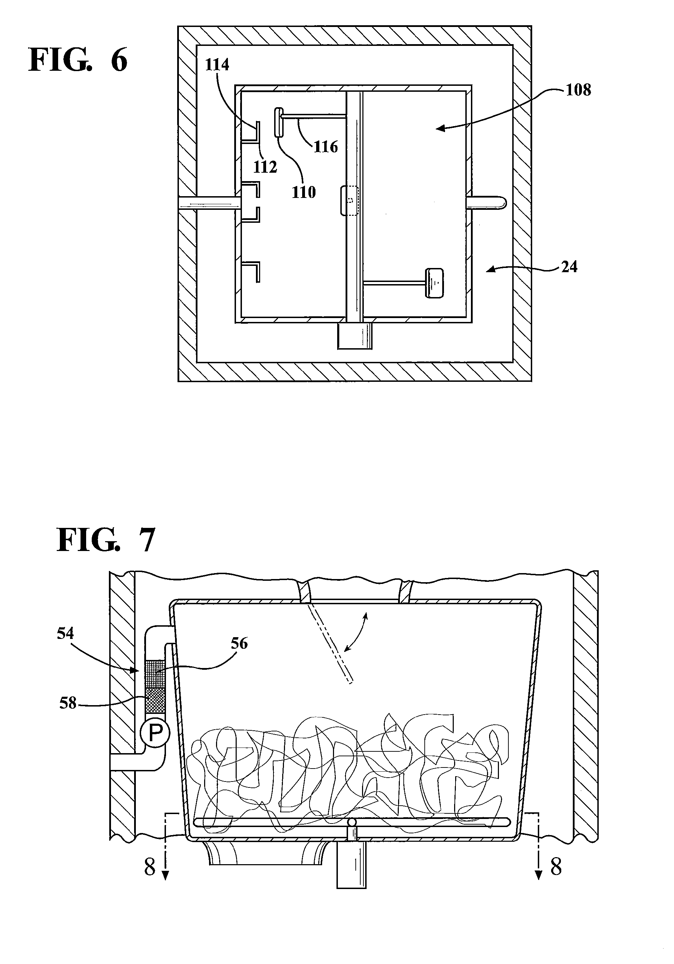

With reference again to Figures 3, 4 and now to Figure 6, the first chamber **24** may further include a shearing device **108.** The shearing device **108** includes a first cutting member **110** rotatable about a third axis. A second cutting member **112** is fixedly mounted to one of either the side, front, or back walls **18, 14, 16** of the first chamber **24.** The first and second cutting members **110, 112** are formed from a durable and rigid material configured to maintain an edge.

The second cutting member **112** includes a sliding surface **114** exposed to a respective one of the side, front, or back walls **18, 14, 16** to which the second cutting member **112** is mounted. The first cutting member **110** is configured to slidingly engage the sliding surface **114** of the second cutting member **112** upon rotation about the third axis so as to create a shearing effect on ground refuse thus further minimizing the size of the ground refuse. The shearing device **108** may include a plurality of first cutting members **110.** Each of the first cutting members **110** has an elongated member **116** extending radially from the third axis. Each of the elongated members **116** is spaced apart from the other. At least one of the elongated members **116** extends radially from the third axis at a different angle than the other elongated member **116.** Thus the first cutting members **110** are all offset along the third axis and radially about the third axis.

The shearing device **108** may disposed beneath the grinding mechanism **70.** Thus gravity introduces refuse passed between the first and second grinding wheels **72, 76** into the bottom portion of the first chamber **24** and the shearing device **108.** The bottom floor **28** of the first chamber **24** may be arcuate and generally extends along a radius which is slightly longer than the length of the elongated members **116** so as to allow the elongated members **116** to come into sliding contact with the bottom surface **32** of the first chamber **24.** Preferably, the bottom floor **28** is made or coated with a slick material such as stainless steel so as to facilitate the deposition of ground refuse into the second chamber **26.**

With reference again to Figures 3 and 4, the device **10** may further include a cleaning mechanism **118** configured to clean the first chamber **24.** The cleaning mechanism **118** is operable to facilitate the removal of refuse from the grinding mechanism **70.** The cleaning mechanism **118** may include a first sprayer **120** configured to eject a cleansing agent into the grinding mechanism **70.** The cleansing agent may include a liquid solvent or water, and is operable to help remove refuse from the surfaces of the grinding mechanism **70.**

The first sprayer **120** may be disposed above the grinding mechanism **70** and includes a first nozzle **122** operable to direct the cleansing agent directly onto the grinding wheels **72, 76.** The first nozzle **122** may be disposed at various angles with respect to the first and second grinding wheels **72, 76** so as to apply a pressure water or liquid solvent treatment thereto. A first valve is operatively connected to the first nozzle **122** so as to control the discharge and pressure of the cleansing agent.

The cleaning mechanism **118** may include a first cartridge **124.** The first cartridge **124** is configured to hold the cleansing agent. A pump **104** is operable to eject the cleansing agent from the first cartridge **124** through the first nozzle **122** onto the grinding wheels **72, 76.** The pump **104** may be adjusted so as to discharge the cleansing agent at various pressures. In some instances, it may be desirable to apply a high pressure discharge to the grind wheels **72, 76** to help scrub off remaining refuse. In other cases, it may be advantageous to apply a low pressure to help saturate the grinding wheels **72, 76** to allow the cleansing agent time to dissolve the refuse.

Various cleansing agents are currently known and used in the art including water or chemical based cleaning agents such as ammonia which also includes various concentration mixes between water and ammonia. The cleansing agents disclosed herein are provided for illustrative purposes and should in no way be read as limiting.

The first cartridge **124** may be removably attached to the first storage chamber. The first cartridge **124** may be replaceable and includes a fitting unique to engage an opening of the first sprayer **120.** Thus when the cleansing agent is consumed, another first cartridge **124** may be used to replace the consumed product, or the first cartridge **124** may be refilled with a cleansing agent.

Alternatively, the device **10** may have a fresh water intake **126** operable to connect the device **10** to a plumbed water source wherein pressure from the water source **106** may be utilized to eject water onto the grinding wheel. However, it should be appreciated that the pump **104** may also be used to provide pressurized spray.

With reference again to Figures 3 and 4, the device **10** may also include a distributing mechanism **128.** The distributing mechanism **128** is operatively connected to the first chamber **24.** The distributing mechanism **128** is operable to introduce a compost accelerant onto the refuse to facilitate the composting process. The distributing mechanism **128** includes a second sprayer **130** configured to eject the compost accelerant onto the refuse.

The distributing mechanism **128** may be disposed above the grinding wheels **72, 76.** It should be appreciated that the pump **104** may be coupled to other devices operable to dispense a solvent. Accordingly the pump **104** may be coupled to the distributing mechanism so as to be further operable to apply pressure to facilitate the discharge of the composting accelerant. Alternatively, the distributing mechanism **128** may include a second pump **132** (not shown) dedicated to the distribution of composting accelerant.

The distributing mechanism **128** may further include a second nozzle **134.** The second nozzle **134** is configured and oriented to apply the compost accelerant over a predetermined area within the first chamber **24.** The second nozzle **134** may distribute the compost accelerant in a fine mist so as to spread the compost accelerant over a larger surface **32** area relative to a stream. The second nozzle **134** may be configured to be adjusted so as to vary the form of the discharged compost accelerant between a fine mist and a stream of liquid.

The compost accelerant may be composed of a bacteria such as a thermophilic bacteria which is operable to flourish in a heated environment wherein the active composting occurs. The distributing mechanism **128** includes a second cartridge **136** containing the compost accelerant.

A pump **104** is operable to discharge the compost accelerant from the second cartridge **136,** through the second nozzles **134** and onto a desired area. Preferably, the compost accelerant is applied directly on the refuse prior to grinding operations. The compost accelerant may include enzymes, probiotics, or other forms of bacteria operable to facilitate the transformation of the refuse into compost.

The second cartridge **136** may be removably attached to the first chamber **24.** The second cartridge **136** may be either refilled with the compost accelerant or a replacement cartridge may be purchased. The second cartridge **136** may include a fitting configured to specifically engage the second sprayer **130.** The second cartridge **136** is fitted to engagingly connect to the second sprayer **130.**

The device **10** may include both a cleaning mechanism **118** and the distributing mechanism **128.** In such an embodiment, the first and second cartridges **124, 136** may be operatively connected to the first nozzle **122.** The pump **104** is downstream a valve. The valve is upstream the first nozzle **122** and controls which of the first and second cartridges **124, 136,** are in fluid communication with the first nozzle **122.**

The cleaning mechanism **118** and distributing mechanism **128** may be manually or automatically actuated. In the case of a manual system, the user simply actuates a button, dial or lever which controls the respective cleansing and distributing mechanism **128.** The device **10** may be configured so as to allow the user to vary the discharge pressure of the respective cleansing and distributing mechanism **128.** Additionally, the first nozzle **122** may be manipulated so as to change the form for which the respective cleansing agent and compost accelerant are discharged.

In the case of a system wherein the cleansing and distributing mechanism **128** are automatically actuated, the device **10** utilizes sensors **64** to detect an environmental condition wherein the use of a cleansing agent or compost accelerant is required or desired to optimize composting. For instance, a sensor **64** may be operable to detect the amount of refuse on the grinding mechanism **70.** The amount of refuse is transmitted to the processor **36.** The processor **36** may also process other information to determine if the cleaning mechanism **118** should be actuated such as the operating state of the grinding wheels **72, 76,** or the number of rotations the grinding wheels **72, 76** have executed. Thus, the processor **36** may actuate the cleaning mechanism **118** when it determines that there is refuse on the grinding wheels **72, 76,** the grinding wheels **72, 76** are not operating, and have completed a thousand revolutions since the last time the cleaning mechanism **118** was actuated. In such a case, the process may actuate the cleaning mechanism **118** so as to spray a cleaning agent onto the grinding mechanism **70.**

The distributing mechanism **128** may also be automatically actuated. For instance, the processor **36** may detect that the grinding wheels **72, 76** are operating and actuate the distributing mechanism **128** so as to release the compost accelerant onto the refuse. Thus, the user provides no input **62** as to the amount or size of the refuse. Rather, the compost accelerant is introduced to the refuse solely upon the operation of the grinding mechanism **70.** Alternatively, sensors **64** may detect the introduction of refuse into the first chamber **24** and transmit the information to the processor **36** wherein the processor **36** actuates the distributing mechanism **128.** Further, the processor **36** may be configured to process the amount and type of refuse introduced into the first chamber **24** and control the amount of compost accelerant being discharged.

The device **10** may include a plurality of second cartridges **136,** each of the plurality of second cartridges **136** having a compost accelerant configured for a specific type of refuse. For instance, one of the second cartridges **136** may contain a compost accelerant optimized to facilitate the composting of meat, whereas another of the second cartridges **136** may contain a compost accelerant optimized to facilitate the composting of vegetables. The processor **36** may selectively actuate one or both of the second cartridges **136** so as to apply discrete amounts of compost accelerant from each of the second cartridges **136** to optimize the composting of the refuse being introduced into the first chamber **24.**

Additionally the grinding mechanism **70** and shearing device **108** may also be automated. In such a case, the device **10** may include an input **62** operable to provide a plurality of grinding operations to the user. For instance, the grinding operation may be based upon a heavy refuse load, a medium refuse load, or a light refuse load. For use herein heavy, medium, and light refer to the amount of refuse being introduced into the composting device **10.** The amount may be based upon various known sizes such as one cup, two cups, or four cups. Upon selection, the grinding mechanism **70** and shearing device **108** may be actuated for a predetermined period of time, at a variable rate of rotation, or a combination of both.

The grinding mechanism **70** and shearing device **108** may be automatically actuated based upon other selectable inputs **62.** The device **10** may be operable to perform and adjust the function of the grinding mechanism **70** and the shearing device **108** based upon the type of refuse being introduced. For instance, a slow rotation of the grinding wheels **72, 76** may be preferable when the refuse consists of bone, whereas a rapid rotation of the grinding wheels **72, 76** may be preferable when refuse is introduced consisting primarily of vegetables.

Likewise, the rotation of the shearing device **108** may further be adjusted based upon the amount of refuse being added or the type of refuse being added. Thus, the processor **36** may be operable to adjust the rate of rotation of the first cutting members **110,** or the number of revolution of the shearing device **108** based upon the amount or type of refuse being added. The actuation of the shearing device **108** and grinding mechanism **70** may be determined by a lookup table. The lookup table may provide a predetermined cycle of operation for the respective grinding mechanism **70** and shearing device **108** based upon the amount or type of refuse being introduced. The processor **36** processes the lookup table to determine the correlating cycle of operation and actuates the grinding and shearing device **108** accordingly. For use herein, a cycle of operation includes, but is not limited to the number of revolutions of the respective grinding mechanism **70** and shearing device **108,** and the rate at which the respective grinding mechanism **70** and shearing device **108** is operated.

Thus, the device **10** may receive information regarding the refuse from a user input. The processor **36** selects a cycle of operation for both the grinding mechanism **70** and shearing device **108** after processing the user input and lookup table. Upon completion of the selected cycle of operation of the grinding mechanism **70,** the processor **36** actuates shearing device **108** in the selected cycle of operation of the shearing device **108.** When the shearing device **108** completes the selected cycle of operation, the processor **36** may further actuate the partition **34** so as to release the ground refuse into the second chamber **26.**

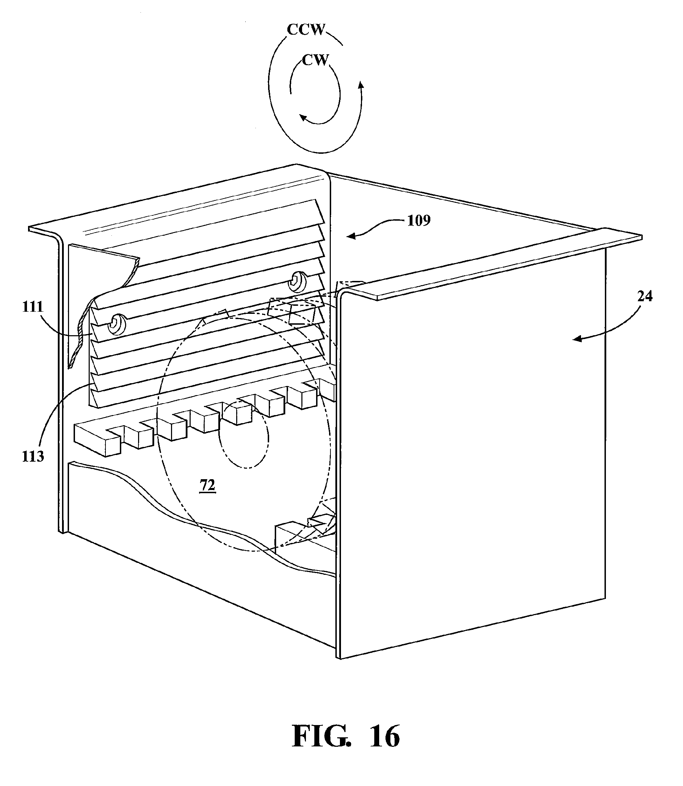

With reference now to Figure 16, the first chamber may further include a baffle **109** formed on one of the side walls **18** of the first chamber **24.** The baffle **109** may be formed of a durable and rigid material such as steel and may be mounted to the side wall **18** using mechanical fasteners such as a bolt. The baffle **109** includes a base **111.** The base **111** is a generally planar member configured to sit flush against the side wall **18.** A plurality of ridges **113** extend outwardly from the base **111.** The ridges **113** are angled relative to the base **111** so as to project downwardly toward the second chamber **26.** The ridges **113** extend along an axis oriented transversely between the front and back walls **14, 16** of the first chamber **24.** The ridges **113** are spaced apart from the outer surface of the first grinding wheel **72** and are generally parallel to the first shaft **74.**

The baffle **109** is operable to engage a generally circular object such as an apple so as to prevent the circular object from rotating free of the grinding mechanism **70.** For example, as an apple is placed into the first chamber **24** for composting operations, the grinding mechanism is actuated. For illustrative purposes, assume the grinding mechanism is actuated so as to rotate clockwise as indicated by the arrow labeled "CW". In instances where the apple is placed between the first grinding wheel **72** and the ridges **113** of the baffle **109,** the ridges **113** of the baffle **109** engage the apple, preventing the apple from rotating and popping off the first grinding wheel **72.** Likewise, in the event the first grinding wheel **72** is rotated counterclockwise, the ridges **113** of the baffle **109** also engage the apple, preventing the apple from rotating and popping off the first grinding wheel **72.** Accordingly, the baffle **109** helps maintain an object, circular or otherwise, in engagement with the first grinding wheel **72** so as to assist in grinding operations. It should be appreciated by those skilled in the art that the baffle **109** may be used in conjunction with any grinding mechanism utilizing a rotational force to grind food matter into compost.

With reference again to Figures 3 and 4, the device **10** may further include a dispensing mechanism **142.** The dispensing mechanism **142** is operable to dispense a curing agent into the second chamber **26.** The dispensing mechanism **142** includes a third nozzle **144.** The pump **104** may be further operable to direct the curing agent onto the ground refuse disposed in the second chamber **26.** It should be appreciated by those skilled in the art that the dispensing mechanism **142** may include a third pump **104** dedicated to the discharge of the curing agent. Alternatively the dispensing mechanism **142** may be configured to allow gravity to supply the curing agent to the ground refuse.

The curing agent may include a mesophilic bacteria which is operable to facilitate the curing process of the ground refuse. A third cartridge **138** containing the curing agent is removably attached to the third nozzle **144.** Upon consumption of the curing agent, the third cartridge **138** may either be replaced or refilled with additional curing agents. The dispensing mechanism **142** may include a plurality of third cartridges **138,** each having a curing agent formulated to optimize the transformation of a specific type of refuse into compost. For instance, refuse composed primarily of meat may require a different concentration or type of mesophilic bacteria than refuse composed primarily of vegetables.

Actuation and control of the dispensing mechanism **142** may be done automatically. For instance, a sensor **64** may be operable to detect the introduction of ground refuse into the second chamber **26.** The processor **36** is in communication with the sensor **64** and actuates the dispensing mechanism **142** when the sensor **64** detects that ground refuse has been delivered into the second chamber **26.**

With reference now to Figures 7, 8, and 9, the device **10** may further include an agitator **146** disposed in the second chamber **26.** The agitator **146** is operable to stir the ground refuse so as to facilitate aeration throughout the ground refuse and thus the compost process. Specifically, the agitator **146** is operable to agitate or stir up the ground refuse to prevent the ground refuse from settling and becoming solidified. The agitator **146** is further operable to uniformly disrupt the ground refuse so that refuse found at the bottom of the pile is moved upwardly so as to be exposed to aeration.

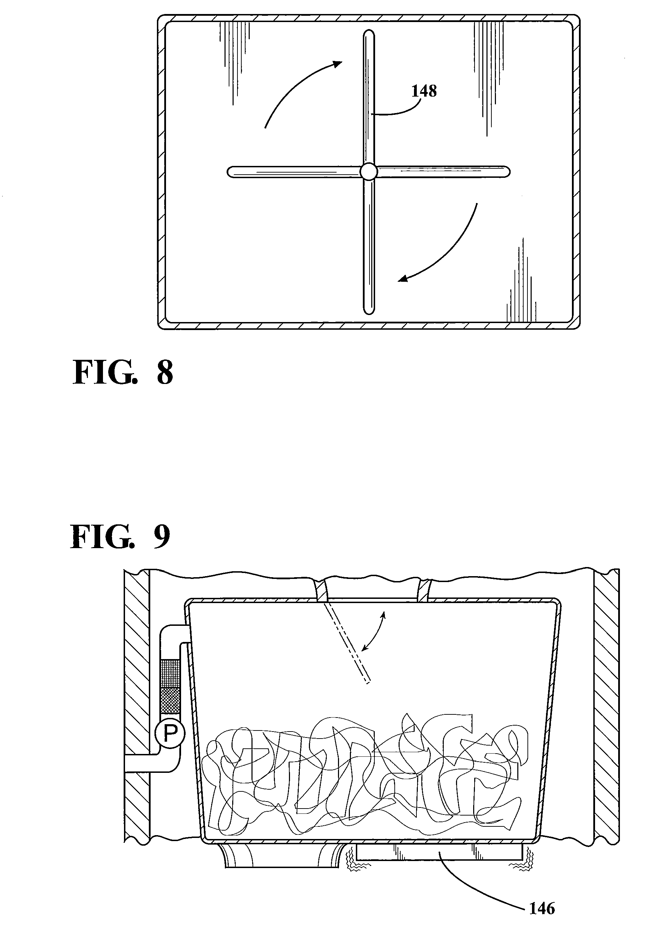

With reference to Figures 7 and 8, an embodiment of the agitator **146** is provided. The agitator **146** may include a rotary member **148** operable to rotate about a fourth axis. The rotary member **148** may rotate about a plane generally parallel to the bottom of the floor of the second chamber **26** or may rotate about an axis extending between the front and back walls **14, 16** of the second chamber **26.** The rotary member **148** is configured to stir the ground refuse.

With reference to Figure 9, an alternative embodiment of the agitator **146** is provided. The agitator may be operable to vibrate the ground refuse. In such instances the agitator **146** includes a vibrating mechanism operable to vibrate a bottom portion of the second chamber **26.** Vibrating mechanisms currently known and used in the art may be adapted for use herein. It should be appreciated that the agitator **146** may include both a rotary member **148** and a vibrating mechanism.

The agitator **146** may be manually actuated or automatically actuated. In the case of automatic actuation the device **10** may have a display **66** and a user input 62 (shown in Figure 2). The display **66** is operable to provide the user with a menu **68** having a plurality of operating programs from which to choose. The processor **36** receives a selected operating program from the user input **62.** The operating program may include a specific command with respect to the distributing mechanism **128,** the operating cycles of the grinding mechanism **70** and shearing device **108,** a specific command with respect to the dispensing mechanism **142,** and/or a specific command with respect to the agitator **146.**

With reference now to Figures 2-4, and 7, the second chamber **26** may further include a plurality of curing containers **150.** The curing containers **150** are disposed beneath the partition **34** and are configured to hold a discrete amount of ground refuse during the curing process. The curing containers **150** may be formed of a durable and rigid material such as steel. The inner surfaces of the curing container **150** may be impregnated with an active agent such as enzymes which are helpful in the breakdown of the refuse held therein.

Each of the curing containers **150** is movable to a ready position wherein a curing container **150** is positioned to receive ground refuse from the first chamber **24.** For instance, upon actuation of the partition **34,** the ground refuse is deposited into a curing container **150** in the ready position. Alternatively, the ground refuse may be collected in a repository disposed in the second chamber and later transferred to a respective curing container **150** as shown in Figures 3 and 4. The curing containers **150** are removably disposed within the second chamber **26.**

With reference again to Figure 2, the curing containers **150** may be mounted onto a platform **152.** The platform **152** may be rotatable. The platform **152** may be operable to rotate one of the plurality of curing containers **150** so as to align an opening of the curing container **150** in the ready position wherein the curing container **150** is registered to receive the released ground refuse from the first chamber **24.**

The second chamber **26** may further include a door **154.** The door **154** is movable between an open and closed position. The door **154** may be slidably mounted to the second chamber **26.** The door **154** may be slidably attached to the housing **12** along a pair of spaced apart rails. Alternatively, the door **154** may be hinged so as to open and close with respect to a side wall **18.**

A platform support **156** is configured to support the platform **152.** The platform **152** is disposed entirely within the second chamber **26** and is enclosed therein when the door **154** is in the closed position. The platform support **156** is a generally planar member and may be slidably mounted to the second chamber **26** along a pair of rails mounted to the inner surfaces **32** of respective side walls **18.** The platform support **156** may be slid in and out of the second chamber **26** so as to facilitate the extraction of a filled curing container **150.** In instances where the door **154** is slidably mounted to the second chamber **26,** the platform support **156** may be formed to the door **154** and extend orthogonally from a bottom end of the door **154.** The door **154** may include a gasket along an outer edge so as to help prevent odors from escaping when the door **154** is in the closed position.

The curing containers **150** may be manually or automatically rotated. In the case of an automatic rotation, the processor **36** is operable to rotate the platform **152** so as to position an empty curing container **150** into the ready position to receive ground refuse and out of the ready position when the curing container **150** is full. Thus, the full curing container **150** may be emptied into a garden or its contents stored elsewhere until the curing process is complete.

A load sensor **158** may be operable to detect the amount of refuse supported by the platform **152.** A load sensor **158** may be used to detect the weight of each curing container **150,** or a single load sensor **158** may be used to detect the weight of the entire platform **152.** Thus, a change in weight may be transmitted to a processor **36.** The processor **36** processes the weight change to determine if a curing container **150** is filled, wherein the platform **152** is rotated so as to position a container in the ready position to a non-ready position. Thus, in this manner, a filled curing container **150** may be positioned out of the ready position to allow an unfilled curing container **150** to occupy the ready position. An indicator (not shown) may provide a notice to the user that the curing container **150** is filled and moved out of the ready position. The indicator may be a light disposed on the door **154** or an outer surface of the housing **12.** Alternatively, the indicator may issue an acoustic notice such as a bell.

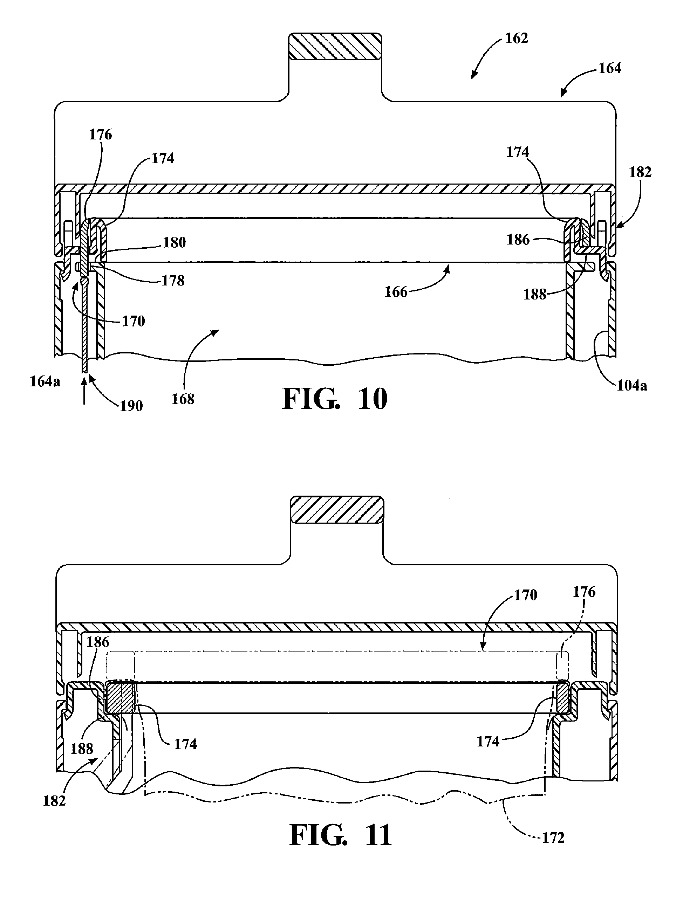

With reference now to Figures 10-12, the device **10** may further include a storage container **162** configured to hold a discrete amount of refuse. Preferably, the storage container **162** is configured to hold a day's worth of refuse. The storage container **162** includes a top cover **164** covering a top opening **166,** a pair of spaced apart container side walls **164a,** a container front and container back walls **164b, 164c** bounding the storage space **168.** The top cover **164** is spaced apart a container bottom wall **164d,** the top cover **164** and container bottom wall **164d** each extend between respective container side, container front and container back walls **164a, 164b, 164c** so as to enclose the storage space **168.** The container bottom wall **164d** may be displaced so as to allow the contents of the storage container **162** to drop. The top cover **164** may be displaced so as to allow access to the storage space **168.** The storage container **162** may be removably mounted onto the first chamber **24** so as to deposit refuse into the first chamber **24.** The storage container **162** may be placed in a kitchen area where refuse is discarded, and later mounted to the first chamber **24** wherein the contents are transferred.

The storage container **162** may include a gripping mechanism **170** operable to hold a bag **172** within the storage space **168** of the storage container **162.** In a preferred embodiment the top opening **166** of the storage container **162** is defined by a ribbed upper edge **174.** The gripping mechanism **170** includes a continuous elongated member **176** bounding an area generally the same shape as the top opening **166** of the storage container **162.** The continuous elongated member **176** may have a generally U-shaped cross section and is dimensioned to engage the ribbed upper edge **174** of the top opening **166** of the storage container **162.**

A bag **172** may be placed over the ribbed upper edge **174.** Preferably the bag **172** is formed of a decomposable material which is suited for composting. The continuous elongated member **176** is placed onto the ribbed upper edge **174** so as to grip a portion of the bag **172** between the ribbed upper edge **174** of the storage container **162** and the U-shaped cross section of the gripping mechanism **170.**

The continuous elongated member **176** may further include a projecting tab **178.** The projecting tab **178** extends downwardly from the continuous elongated member **176** when the continuous elongated member **176** is engaged with the top opening **166.** The projecting tabs **178** are registered to slide within a receiving aperture **180** disposed adjacent the ribbed upper edge **174** of the storage container **162.**

The gripping mechanism **170** includes a retainer **182** to help retain the gripping mechanism **170** onto the opening of the storage container **162** and hold the bag **172** therebetween. In a preferred embodiment, the gripping mechanism **170** is a magnetic clasp **184.** The magnetic clasp **184** includes a first magnet **186** is operable to engage a second magnet **188.** The first magnet **186** is disposed on the gripping mechanism **170,** and the second magnet **188** is dispose on the storage container **162** so as to help secure the gripping mechanism **170** therebetween.

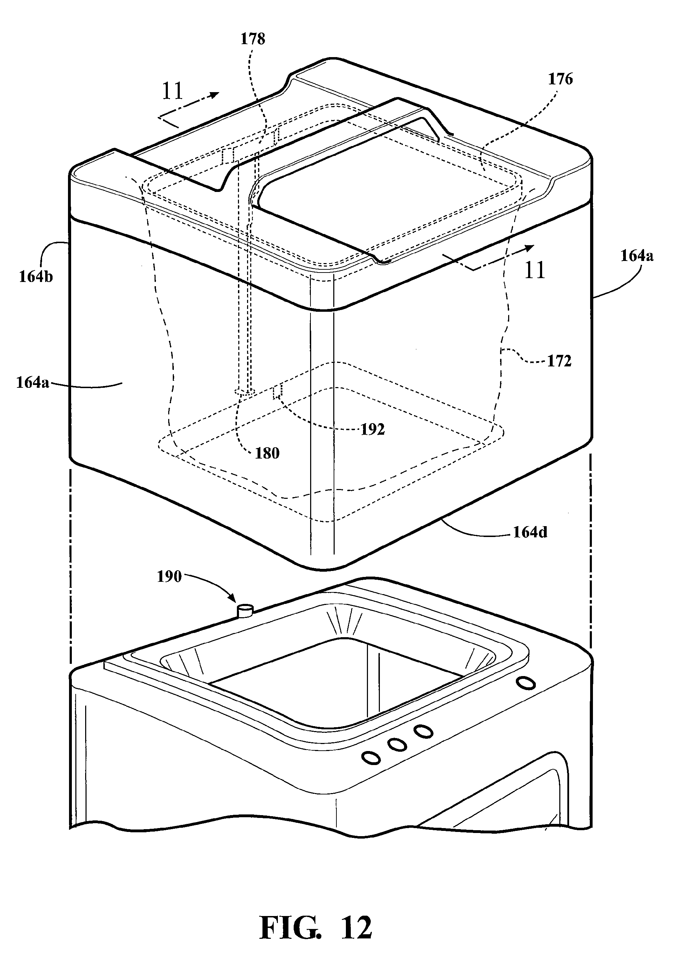

An ejector **190** is disposed adjacent the receiving apertures **180** and operable to bias the projecting tabs **178** upwardly so as to overcome the magnetic force of the magnetic clasp **184** and separate the gripping mechanism **170** from the ribbed upper edge **174** of the storage container **162.** When separated, the bag **172** is no longer gripped and is free from being held. The ejector **190** may be actuated by an actuator **192** disposed adjacent a bottom edge of the storage container **162,** or on the top surface of the device **10** as shown in Figure 12.

Thus, when the storage container **162** is mounted onto the opening of the first chamber **24,** actuation of the ejector **190** causes the bag **172** and the entire contents of the bag **172** to fall into the first chamber **24** to begin grinding operations. The ejector **190** may be further operable to actuate the bottom partition **34** so as to simultaneously displace the bottom partition **34** and allow the bag **172** and its contents to fall into the first chamber **24.**

Thus, the storage container **162** may be stored in the kitchen and refuse fit for composting may be stored in the storage container **162** until the bag **172** is full. The user may simply place the storage container **162** on top of the first chamber **24.** The placement of the storage container **162** onto the first chamber **24** actuates the actuator **192** which in turn ejects the protruding tabs from the receiving apertures **180,** while simultaneously displacing the bottom partition **34.** Thus the bag **172** is free to drop into the first chamber **24** without the user handling the bag **172.**

With reference now to Figure 13, another embodiment of a storage container **162** is provided. The storage container **162** is fixedly mounted to top of the first chamber **24.** The storage container **162** includes a rotatable door **194** disposed beneath the top opening **166.** The rotatable door **194** is rotatable about an axis extending between the front and back walls **14, 16** of the storage container **162.**

The rotatable door **194** includes at least two rotating panels **196.** Each of the rotating panels **196** is spaced apart from each other so as to provide access to the first chamber **24** for refuse to be introduced. Preferably the rotatable door **194** includes three rotating panels **196.** Preferably,the rotating panels **196** are evenly spaced apart and are configured so that two of the panels **196** may be registered to align with opposing edges of the top opening **166.** Two of the panels **196** may be rotated such that the outer edges of the panels **196** are in contact with opposing edges of the top opening **166,** presenting a compartment **202** for which refuse may be introduced. The two panels **196** may also be rotated so as to present a seal wherein access to the inner space of the storage container **162** is not possible without further rotation of the door **154.**

In operation, refuse is placed into the compartment **202.** The rotatable door **194** is then rotated so that the refuse is delivered into the storage container **162.** The rotatable door **194** may be further rotated wherein the rotating panels **196** which previously defined the compartment **202** are exposed to an inner cleaning chamber **204.** The inner cleaning chamber **204** is defined by a generally arcuate member extending from a side wall **18** of the storage container **162.** The arcuate member follows a radius of curvature which is slightly longer than the length of the respective rotating panels **196** as defined by the distance between the axis of rotation and the outer edge of the rotating panels **196.** Thus the outer edges of the rotating panels **196** may come into sliding contact with the arcuate member.

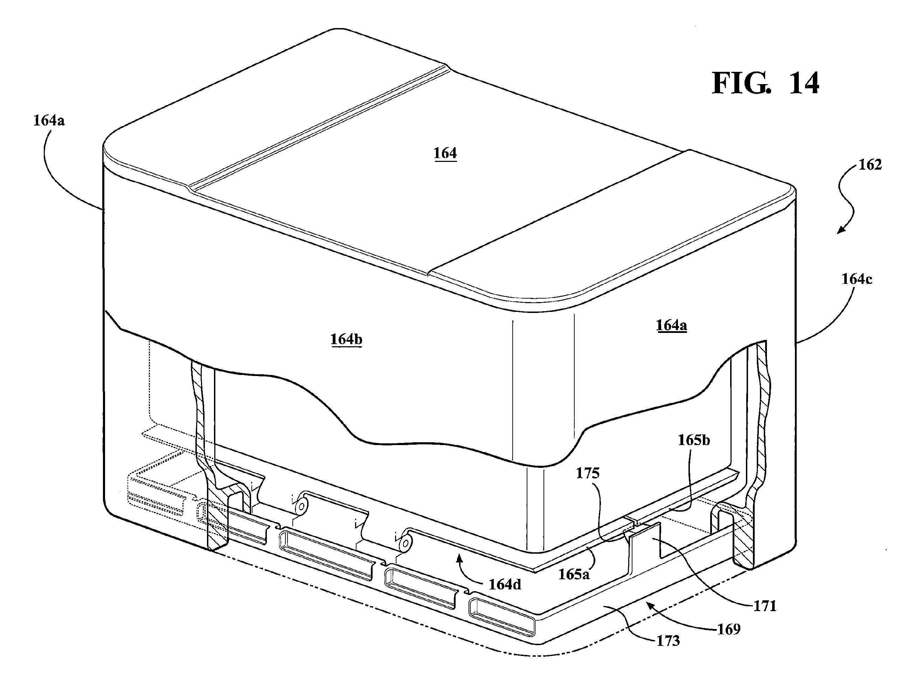

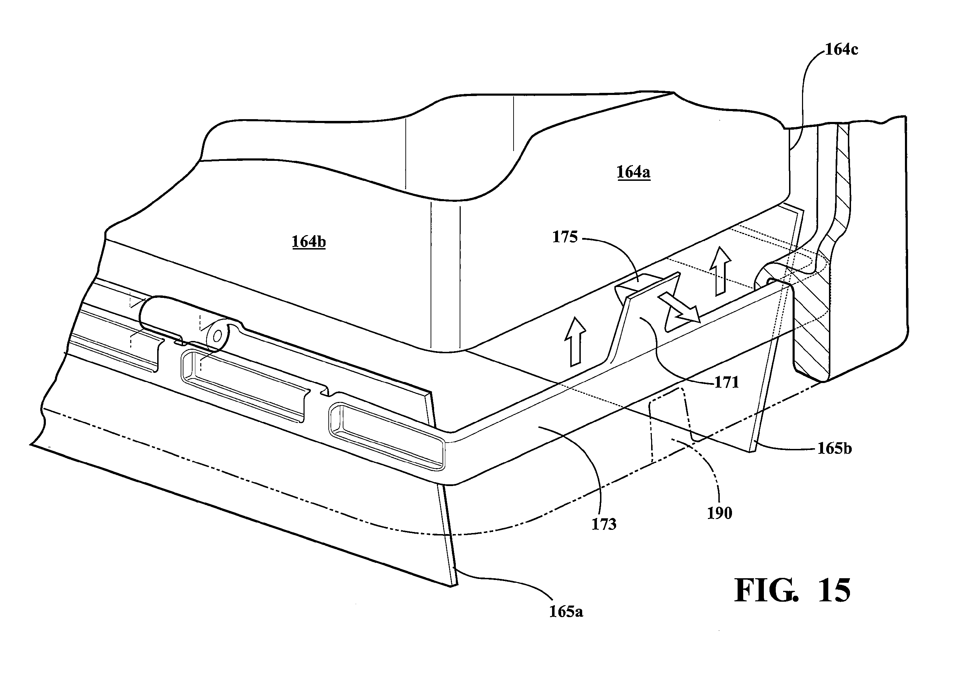

With reference now to Figures 14 and 15, yet another embodiment of the storage container **162** is provided. The container bottom wall **164d** is displaceable with respect to the storage space **168.** In such an embodiment, the bottom wall **164d** includes a first panel **165a** spaced apart a second panel **165b.** The first and second panels **165a, 165b** are pivotably mounted to opposite walls of the storage container **162.** For illustrative purposes, the first and second panels **165a, 165b** are shown pivotably mounted to the container front and container back walls **164a, 164b.** A pair of biasing members (not shown) may be operable to continuously urge respective first and second panels **165a, 165b** downwardly with respect to the top cover **164** of the storage container **162.** Alternatively, the first and second panels **165a, 165b** may be operable to drop using gravity assist.

The release mechanism **169** is operatively connected to the distal ends of both the first and second panels **165a, 165b.** The release mechanism **169** may include a resilient tab **171** operable to displace free and clear of the first and second panels **165a, 165b.** For example, the release mechanism **169** may be disposed along a bottom edge of the storage container **162.** The release mechanism **169** includes a release mechanism base **173.**

The release mechanism base **173** is movable with a slot formed within the bottom edge of the storage container. The release mechanism base **173** is movable between a first and second position. In the first position, the release mechanism base **173** is adjacent the bottom edge of the slot, and in the second position, the release mechanism base **173** is displaced upwardly with respect to the bottom edge.

The release mechanism tab **171** extends upwardly from a top surface of the release mechanism base **173.** The tab **171** includes a tab head **175** which projects inwardly towards the inner space of the storage container **162.** The tab head **175** includes a planar surface. As shown in Figure 14, when the base **173** is in the first position, the planar surface of the tab head **175** supports the distal ends of respective first and second panels **165a, 165b,** counteracting the biasing members, or weight of the first and second panels **165a, 165b,** so as to keep the first and second panels **165a, 165b** along a common plane.

With reference now to Figure 15, the base **173** is shown in the second position. The base **173** is pushed upwardly from an ejector **190** which is indicated by a dashed line. The ejector **190** is disposed on the top surface of first chamber and extends upwardly beyond the top surface. The storage container **162** is configured sit upon the opening of the first chamber **24,** wherein the first and second panels **165a, 165b** are configured to pivot within the first storage chamber **24** so as to allow the bag to drop therein.

The storage container **162** may be used adjacent the sink area and stored on the kitchen counter. The base **173** of the release mechanism **169** is positioned in the first position, and may be placed therein by operation of gravity or a biasing member urging the base **173** away from an upper edge of the slot in which the base **173** is seated. Thus, the first and second panels **165a, 165b** are held on a common plane, and may support the weight of the bag and its content.

When the bag is full, the storage container **162** may be seated onto the opening of the first chamber **24** of the composting device **10,** wherein the ejector **190** displaces the base **173** upwardly into the second position, pushing the tab head **175** past the first and second panels **165a, 165b.** The biasing members operatively connected to respective first and second panels **165a, 165b** are then free to urge the first and second panels **165a, 165b** down and outwardly so as to allow the bag to drop into the first chamber **24** wherein grinding operations occur. Alternatively, gravity may be used to allow the unsupported first and second panels **165a, 165b** to pivot downwardly so as to allow the bag to drop into the first chamber **24.**

The inner cleaning chamber **204** may include a second cleaning mechanism **206** operable to clean the two rotating panels **196** which previously held refuse introduced into the first chamber **24.** In a preferred embodiment, the second cleaning mechanism **206** is a photo-catalytic device **208** operable to produce a photo-catalytic reaction on the exposed rotating panels **196** therein. In such an embodiment, the rotating panels **196** may be formed of a titanium dioxide coating and the photo-catalytic device **208** may be operable to generate a UV light. However, it should be appreciated that the second cleaning mechanism **206** may be a third sprayer **210** operatively connected to a water source **106,** a fourth cartridge **140** having a cleansing agent, or the first cartridge **124.**

With reference again to Figures 3 and 4, the device **10** may further include a chamber heater **206,** the chamber heater is operable to selectively heat the first or second chambers **24, 26.** A sensor **64,** such as a thermistor **64a,** is operatively connected to detect the temperature within the first or second chamber. The processor **36** processes the temperature of the first or second chamber **24, 26** and may actuate the chamber heater **206** so as to generate a temperature operable to optimize the process for which the first and second chambers **24, 26** are configured to perform. The thermistor **64a** may be disposed within a depression **18a** formed on a side wall **18** of the first chamber **24** so as to prevent the grinding mechanism from damaging the thermistor **64a,** further the thermistor **64a** would be physically exposed and in contact with the refuse so as to provide a more accurate reading of the temperature of the refuse itself.

The processor may be further operable to process other information received from various sensors **64** within the first and second chambers **24, 26** to determine if the chamber heater **206** should be activated. The processor **36** may take into consideration the minimal energy use needed to optimize the temperature in respective first and second chambers **24, 26.** For instance, the processor **36** may decide to actuate the blower **42** in instances where there is sufficient heat in the first chamber **24** to heat the second chamber **26** to a desired temperature. In other instances, the processor may actuate the chamber heater **206** to heat both the first and second chambers **24, 26** where a heat deficiency exists in both chambers **24, 26.**

It is intended that the following claims define the scope of the invention and that the method and apparatus within the scope of these claims and their equivalents be covered thereby. This description of the invention should be understood to include all novel and non-obvious combinations of elements described herein, and claims may be presented in this or a later application to any novel and non-obvious combination of these elements. Moreover, the foregoing embodiments are illustrative, and no single feature or element is essential to all possible combinations that may be claimed in this or a later application. For example, other inventions arising from this disclosure may include any combination of the following concepts.

According to one aspect of the invention a device for transforming refuse into compost is provided. The device includes a first chamber, which may include a grinding mechanism. The grinding mechanism is configured to grind the refuse into small parts so as to facilitate and expose the refuse surfaces to aeration. It is known by those skilled in the art that exposure to aeration expedites the composting process.

A second chamber is attached to the first chamber. The second chamber is configured to store the ground refuse and provide a space optimal to cure the ground refuse into compost. The second chamber may be further configured to stir the ground refuse so as to prevent the ground refuse from solidifying and delaying the compost process. Ground refuse from the first chamber is dispensed into the second chamber.

Preferably the second chamber is disposed beneath the first chamber to allow gravity to deliver the ground refuse into the second chamber. In such an instance, a partition may be disposed between the first and second chambers. The partition may be manually or automatically actuated so as to create an opening and deposit the ground refuse from the first chamber to the second chamber.

The device may include tenderizing device operable to tenderize the refuse prior to grinding operations. The tenderizing device may be a flash steamer. The flash steamer is operable to flash steam the refuse prior to actuation of the grinding mechanism. The flash steamer may be disposed in the first chamber. The flash steamer may include a vaporizer having a heating element and a pump. A water source is connected to the flash steamer. The pump is operable to eject water from the water source through the vaporizer wherein the first heating element heats the vaporized liquid to a predetermined temperature. Specifically, the vaporized liquid creates what is commonly referenced as a flash steam environment wherein refuse is partially cooked.

A blower is operable to blow fresh air and thermal energy from the first chamber to the second chamber. The device includes a conduit which interconnects the first chamber to the second chamber. The conduit and the blower allow for the exchange of resources between the first and second chambers. Specifically, moisture found in the air may be transmitted from the first chamber down to the second chamber. Likewise heat may be transferred and shared between the first and second chambers to facilitate the composting process.

In one embodiment the conduit is connected to a bottom surface of the second chamber. In such an embodiment, the composting device may further include a manifold having a plurality of vents. The manifold may further include a manifold intake configured to engage the conduit. The manifold is disposed on the bottom surface of the second chamber and includes a support surface for holding ground up refuse during the curing process.

Air and moisture from the first chamber may be delivered to the second chamber by use of a blower. The blower pushes air from the bottom portion of the second chamber through the manifold. Specifically, air is drawn from the manifold intake and pushed through each of the plurality of vents. The air and moisture rise upwardly through the ground refuse and towards the first chamber so as to flow upwardly. The air may be directed to an outtake, or recirculated. Thus moisture and heat from the first chamber are filtered and permeated through the refuse found in the second chamber.

Alternatively one end of the conduit may be attached to a side wall of the second chamber. Air is pushed through the side wall of the second chamber to the outtake. The air is thus pulled over a top surface of ground refuse wherein moisture and temperature from the first chamber are shared to the particulates making up the ground refuse found near the top surface of the second chamber.

The device may further include a filter. The fresh air intake is disposed on the first chamber and is generally open to the environment. The outtake is disposed on the second chamber. Air from the fresh air intake is drawn from the environment and distributed and pushed through the outtake. The filter is operable to capture odor emanating from within the first and second chambers and deliver a pleasant fragrance to the environment through the outtake. The filter may include a first substrate and a second substrate. The first substrate is exposed to the inner space of the second chamber and the second substrate is exposed to the environment. The first substrate is formed of a material operable to filter odors such as charcoal. The second substrate is formed of a material operable to release a fragrance into the environment.

The blower may be operable to urge air and thermal energy from both the first and second chamber through the filter and out to the environment. The blower may be automated wherein a processor receives input from a plurality of sensors so as to actuate the device to optimize the composting process. For instance, a sensor may be disposed within either of the first and second chambers. The sensor may be operable to detect the environmental condition of the first and second chambers. The sensor is in communication with the processor and transmits a signal to the processor. The processor processes the signal for which the processor calculates a desired operating mode of the device which is optimal in light of the detected environmental conditions. It should be appreciated by those skilled in the art that the device may include a plurality of sensors operable to detect numerous environmental conditions. For example, the plurality of conditions may include the amount of ground refuse contained within the second chamber, the amount of moisture within the first and second chambers, and the temperature within the first and second chambers.

In one example, the processor processes the signal from the sensor to actuate the blower when a predetermined environmental condition is detected within the first or second chamber. In instances where there is a relatively sufficient amount of moisture or heat in the first chamber but not a sufficient amount of moisture or heat in the second chamber, the sensor is operable to detect and transmit the environmental conditions of the respective chambers to the processor. The processor may then actuate the blower so as to direct moisture and thermal energy from the first chamber to the second chamber through the conduit. It should also be appreciated that the blower may be configured to blow air at a variable rate and the processor is operable to adjust the rate of air flow based upon the signal provided by the sensor.

As stated above, the composting device includes a first chamber, which may have a grinding mechanism. The grinding mechanism is operable to reduce the size of refuse into particles generally uniform in size and dimension so as to optimize the ground refuse for aeration and facilitate the composting process. In one embodiment, the grinding mechanism includes a first grinding wheel rotatable about a first axis. A second grinding wheel is rotatable about a second axis. The first and second axes are generally parallel to each other and spaced apart from each other. The grinding mechanism extends longitudinally along the first axis so as to be between a front wall and back wall of the first chamber. Thus, the first and second axes are generally parallel with respect to the side walls of the first chamber. The first and second axes are angled relative to each other with respect to a plane extending along the horizon. In other words, the first axis is above and generally offset radially from the second axis.

The first grinding wheel has a first diameter and the second grinding wheel has a second diameter. The first diameter is less than the second diameter. The first grinding wheel is disposed above the second grinding wheel and adjacent the side wall relative to the second grinding wheel. The first grinding wheel includes a plurality of first teeth extending outwardly beyond an outer surface of the first grinding wheel. The second grinding wheel includes a plurality of second teeth which also extend outwardly beyond an outer surface of the second grinding wheel. The first and the second grinding wheels are spaced apart so as to place respective first and second teeth in sliding communication with the outer surface of the respective first and second grinding wheels.

The grinding mechanism is configured to grind refuse between the first and second grinding wheels. The first and second grinding wheels are operable to rotate opposite each other so as to feed and introduce refuse between the two grinding surfaces. It should be appreciated that in instances where the ground refuse is stuck the first and second grinding wheels may be rotated in an opposite direction so as to eject refuse caught therebetween.

The grinding mechanism may be actuated by a single motor using a configuration of gears. Alternatively, the driving mechanism may include two motors, each dedicated to a respective grinding wheel. In such an embodiment, the grinding mechanism may be operable to actuate the respective grinding wheels at different speeds so as to facilitate the grinding of refuse.

The first chamber may further include a comb having a plurality of comb teeth. The comb may be disposed on one of the side walls. Each of the comb teeth is spaced apart from the other and the second teeth of the second grinding wheel are configured to fit between each of the respective comb teeth upon rotation of the grinding wheel so as to grind refuse therebetween. The comb is further operable to prevent refuse from being stuck to the side wall of the first chamber. The comb is may be fixedly mounted to one of the side walls. The comb may extend outwardly from the side wall so as to lie along a plane generally parallel to the horizon. Alternatively, the comb may extend downwardly along a plane generally parallel to the side wall. The device may include a pair of combs, one on each of the side walls. The combs are operable to prevent refuse from passing through and between the spaces between the first and second grinding wheels and the side walls. The combs are further operable to facilitate the introduction of refuse into the second chamber through the process of being ground between the first and second grinding wheels.

A stopper may be formed or disposed on the one of the side walls. The stopper may include a plurality of stopping members projecting outwardly and angularly from the side wall towards the space between the first grinding wheel and second grinding wheel. The stopping members are operable to prevent refuse from being introduced into the spaces between the second grinding wheel and the side wall thus helping to ensure that food is introduced into the second chamber between the first and second grinding wheels.

The first chamber may further include a shearing device. The shearing device includes a first cutting member rotatable about a third axis. A second cutting member is fixedly mounted to one of either the side, front, or back walls of the first chamber. The second cutting member includes a sliding surface exposed to a respective one of the side, front, or back walls to which it is mounted. The first cutting member is configured to slidingly engage the sliding surface of the second cutting member upon rotation about the third axis so as to create a shearing effect on ground refuse thus further minimizing the size of the ground refuse.

The shearing device may include a plurality of first cutting members. Each of the first cutting members has an elongated member extending radially from the third axis. Each of the elongated members is spaced apart from each other. At least one of the elongated members extends radially from the third axis at a different angle than the other elongated member. Thus they are all offset both in space defined along the third axis and radially about the third axis.

The shearing device may be disposed beneath the grinding mechanism. Thus gravity introduces refuse passed between the first and second grinding wheels into the bottom portion of the first chamber and the shearing device. A bottom floor of the first chamber may be arcuate and generally extends along a radius which is slightly longer than the length of the elongated members so as to allow the elongated members to come into sliding contact with the first bottom surface of the first chamber.

The device may further include a cleaning mechanism operative to clean the first chamber. The cleaning mechanism is operable to facilitate the removal of refuse from the grinding mechanism. The cleaning mechanism may include a first sprayer configured to eject a cleansing agent into the grinding mechanism. The cleansing agent is a solvent operable to help remove refuse from the surfaces of the grinding mechanism.

The first sprayer may be disposed above the grinding mechanism and includes nozzles operable to direct the cleansing agent directly onto the first and second grinding wheels. The cleaning mechanism may further include a first cartridge containing the cleansing agent. A pump is operable to eject the cleansing agent from the first cartridge through the nozzles onto the grinding wheels. Various cleansing agents are currently known and used in the art including water or chemical based cleaning agents such as ammonia which also includes various concentration mixes between water and ammonia.

The first cartridge may be removably attached to the first storage chamber so as to make the first cartridge replaceable. Thus when the cleansing agent is consumed, another first cartridge may be used to replace the consumed product. Alternatively, the device may have a fresh water intake operable to connect the device to a plumbed water source. In such an embodiment, pressure from the water source may be utilized to eject water onto the first and second grinding wheels.

The device may also include a distributing mechanism. The distributing mechanism is operatively connected to the first chamber. The distributing mechanism is operable to introduce a composting accelerant onto the refuse to facilitate the composting process. The distributing mechanism includes a second sprayer configured to eject the compost accelerant onto the refuse. The compost accelerant may be composed of a bacteria such as a thermophilic bacteria which is conditioned to flourish in a heated environment optimal for active composting process.

The distributing mechanism may further include a second cartridge containing the compost accelerant. A pump is operable to eject the compost accelerant from the second cartridge. The compost accelerant may include enzymes, probiotics and/or other bacteria operable to facilitate the transformation of the refuse into compost. The second cartridge may be removably attached to the first chamber. Thus the second cartridge may be either refilled with the compost accelerant or a replacement cartridge may be utilized. The second cartridge is fitted to engagingly connect to the second sprayer.

The device may include both the cleaning mechanism and the distributing mechanism. The cleaning mechanism and distributing mechanism may be manually or automatically actuated. In an example of automated actuation, a sensor is operable to detect the amount of refuse on the grinding mechanism. The processor is operable to process the environmental conditions of the first taken from the sensors to determine that the first or second grinding wheel requires cleaning. The processer is further operable to actuate the cleaning mechanism so as to spray a cleaning agent onto the grinding mechanism.

The grinding mechanism and shearing device may also be automated. For instance, the device may include an input operable to provide a plurality of grinding operations to the user. In such a case, the device may further include a display having a menu. The menu includes a selection of grinding operations from which the user may select. The selection of grinding operations may be based upon a heavy refuse load, a medium refuse load, or a light refuse load. For use herein heavy, medium, and light refer to the amount of refuse being introduced into the composting device. The amount may be based upon various known sizes such as one cup, two cups, or four cups. Other selectable inputs may be based upon the type of refuse being introduced.

The processor may also be operable to perform and adjust the function of the grinding mechanism and the shearing device based upon the type of refuse being introduced. For instance, a slow rotation of the grinding wheels may be preferable when the refuse consists of bone, whereas a rapid rotation of the grinding wheels may be preferable when refuse is introduced consisting primarily of vegetables. Likewise, the rotation of the shearing device may further be affected by the amount of refuse being added or the type of refuse being added. These selections may be placed in a lookup table wherein upon selection of the amount or type of refuse being introduced, the lookup table provides a predetermined cycle of operation for the respective devices within the compost device.

The device may be operable to automatically perform certain functions without user input. For instance, the processor may be operable to automatically actuate the distributing mechanism when the grinding mechanism is actuated. Thus, the user provides no input as to the amount or size of the refuse. Rather, the compost accelerant is introduced to the refuse solely upon the operation of the grinding mechanism.

The device may further include a dispensing mechanism. The dispensing mechanism is operable to dispense a curing agent into the second chamber. The dispensing mechanism includes a dispensing nozzle and a pump operable to direct the curing agent onto the ground refuse disposed in the second chamber. Alternatively the a nozzle may be disposed above the second chamber so as to allow gravity to supply the curing agent to the ground refuse.

The curing agent may include a mesophilic bacteria which is operable to facilitate the curing process of the ground refuse. A third cartridge containing the curing agent is removably attached to the nozzle. Upon consumption of the curing agent, the third cartridge may either be replaced or refilled with additional curing agents.

Actuation and control of the dispensing mechanism may be manually or automatically done. In an illustrative example of automation, a sensor may be operable to detect the introduction of ground refuse into the second chamber. The processor is in communication with the sensor and actuates the dispensing mechanism when the sensor detects that ground refuse has been delivered into the second chamber.

The device may include an agitator disposed in the second chamber. The agitator is operable to stir the ground refuse so as to facilitate the aeration of the ground refuse and thus the compost process. Specifically, the agitator is operable to agitate or stir up the ground refuse to prevent the ground refuse from settling and becoming solidified. The agitator is further operable to ensure that the refuse is uniformly moved so that refuse found at the bottom of the pile is moved upwardly so as to be exposed to aeration.

In one embodiment, the agitator may include a rotary member operable to rotate about a fourth axis. The rotary member may rotate about a plane generally parallel to the bottom of the floor of the second chamber or may rotate about an axis extending lengthwise between the front and back walls of the second chamber so as to be parallel between the opposing side walls. The rotary member is configured to stir the ground refuse. Alternatively the agitator may vibrate the ground refuse. In such instances the agitator includes a mechanism operable to vibrate a bottom portion of the second chamber.

The second chamber may further include a plurality of curing containers. Each of the curing containers is movable to a ready position wherein the curing container is positioned to receive ground refuse from the first chamber. The curing containers are removably disposed within the second chamber. The curing containers may be mounted onto a platform. The platform is rotatable. The partition may be further operable to deliver ground refuse into a respective curing container.

For instance, the second chamber may be disposed beneath the first chamber. The partition is operable to release ground refuse from the first chamber into the second chamber. The platform may be operable to rotate one of the plurality of curing containers so as to align an opening of the curing container in the ready position wherein the curing container is registered to receive the released ground refuse from the first chamber. The second chamber may further include a door mounted to the second chamber. The door includes a platform support. The platform support is configured to support the platform. The door is movable between an open and closed position. The platform is disposed entirely within the second chamber and is enclosed therein, the platform support being a generally planar member extending orthogonally from a bottom end of a first door panel.

The processor is operable to rotate the platform so as to position an empty curing container into the ready position. A load sensor may be disposed so as to detect the amount of refuse held by the platform wherein the platform is rotated so as to position a curing container in the ready position to a nonready position when the container is filled with ground refuse and thus an empty container is then moved to the ready position, and the filled curing container may be emptied. An indicator may be provided so as to alert the user that the filled curing container needs to be emptied.

The device may further include a storage container having a storage space configured to hold a discrete amount of refuse. The first chamber includes a first opening and the storage container is configured to fittingly mount onto the first opening of the first chamber.

The storage container may include a gripping mechanism operable to hold a bag within the storage space of the storage container. In a preferred embodiment the gripping mechanism has a U-shaped cross section and is dimensioned to engage a ribbed upper edge of the opening of the storage container. A bag may be inserted within the storage container. Preferably, the bag is made of a compostable material.

The bag is placed over the ribbed upper edge. The gripping mechanism is placed onto the ribbed upper edge so as to grip a portion of the garbage bag between the ribbed upper edge of the storage container and the U-shaped cross section of the gripping mechanism.

The storage container may further include a release mechanism operable to separate the gripping mechanism from the ribbed upper edge. For instance, the gripping mechanism may further include a projecting tab and a magnetic clasp. The magnetic clasp includes a first magnet disposed on the gripping mechanism operable to engage a second magnetic clasp disposed on the storage container so as to help secure the gripping mechanism thereto.

The projecting tabs are registered to engage a pair of receiving apertures. An ejector is disposed adjacent the receiving apertures. The ejector is operable to bias the projecting members upwardly so as to overcome the magnetic force of the magnetic clasp and separate the gripping mechanism from the ribbed upper edge of the storage container thus releasing the bag from being held. When the storage container is mounted onto the opening of the first chamber, actuation of the ejector causes the bag and the entire contents of the bag to fall into the first chamber to begin grinding operations.

In another embodiment of a storage container, the storage container includes a top opening and a rotatable door disposed beneath the top opening. The rotatable door is rotatable about an axis extending between front and back side walls of the storage container. The rotatable door includes at least two panels extending radially from a shaft coaxial with the axis. Each of the panels is spaced apart from each other so as to provide access to the first chamber for refuse. Preferably the rotating door includes three panels.

The panels are evenly spaced apart and are configured so that two of the panels may be registered to align with opposing edges of the opening so as to present a seal wherein the contents and access to the inner spaces of the storage container are not possible without further rotation of the door. The refuse may be placed into the space defined by the top opening and the exposed panels. The door is then rotated so that the refuse is delivered into the storage container. As the refuse is passed, the door may be further rotated wherein the two panels are exposed to an inner cleaning chamber. The inner cleaning chamber includes a photo-catalytic device operable to produce a photo-catalytic reaction within the inner cleaning chamber and the exposed panels therein. The panels may be formed of a titanium dioxide coating and the photo-catalytic device may be operable to generate a UV light.

The bottom floor of the storage container may be displaceable from one of a pair of side walls. The storage container may further include a bottom wall displacable so as to provide access to the first chamber. The bottom wall may include a first panel spaced apart a second panel, wherein the first and second panels are pivotably mounted to opposite walls of the storage container. The device may also include a release mechanism operatively connected to the distal ends of oth the first and second panels. The release mechanism may be operable to retain the first and second panels along a horizontal plane, and to disengage the first and second panels so as to allow the first and second panels to displace downwardly so as to provide access to the first chamber.

In another embodiment, the device further includes a baffle disposed on one of the side walls of the first chamber. The baffle may include a base that is a generally planar member configured to sit flush against the side wall. The baffle may further invlude a plurality of ridges extending outwardly from the base, and each of the plurality of ridges may be angled relative to the base so as to project downwardly toward the second chamber. The ridges may extend along an axis oriented transversely between the front and back walls of the first chamber.

Obviously, many modifications and variations of the present invention are possible in light of the above teachings and may be practiced otherwise than as specifically described while within the scope of the appended claims.

## Claims

1. A device for transforming refuse into compost, the device comprising:
a first chamber having a grinding mechanism operable to grind the refuse;
a second chamber attached to the first chamber, the second chamber storing the ground refuse so as to promote the composting process; and
a conduit interconnecting the first chamber to the second chamber, so as to share thermal energy and moisture between the first and second chamber.

2. The device as set forth in claim 1, wherein the second chamber is disposed beneath the first chamber.

3. The device as set forth in claim 1 or 2, further comprising:
a flash steamer, the flash steamer operable to flash steam the refuse prior to actuation of the grinding mechanism;
a blower, the blower operable to blow air and thermal energy from the first chamber to the second chamber; or
a manifold disposed on a bottom floor of the second chamber, the manifold in fluid communication with the conduit, the manifold having at least one vent operable to pass air and thermal energy through the ground refuse.

4. The device as set forth in claim 1, 2 or 3, wherein the conduit is connected to a bottom surface of the second chamber or a side wall of the second chamber.

5. The device as set forth in any one of the preceding claims, further including an outlet and a filter, the outlet disposed on the second chamber operable to release air and thermal energy from the second chamber to the environment, the filter mounted to the outlet so as to filter the air and thermal energy released into the environment.

6. The device as set forth in claim 5, wherein the filter includes a first substrate and a second substrate, the first substrate is exposed to the inner space of the second chamber, and the second substrate exposed to the environment, and the device optionally further includes a blower operatively connected to the conduit and upstream the filter, the blower operable to urge air and thermal energy from both the first and second chamber through the filter and out to the environment.

7. The device as set forth in claim 6, further including a processor and a sensor, the sensor operable to detect a plurality of environmental conditions of the first and second chambers, the sensor in communication with the processor and sending a signal to the processor, the processor processing the signal from the sensor so as to actuate the blower when a predetermined environmental condition is detected within either the first or second chambers.

8. The device as set forth in claim 7, wherein the blower is configured to blow air at a variable rate, the processor operable to adjust the rate of air flow based upon the signal provided by the sensor, and wherein the sensor is optionally a plurality of sensors operable to detect at least one of the plurality of environmental conditions, wherein the plurality of environmental conditions include an amount of ground refuse contained within the device, an amount of moisture within the device, and a temperature within the device.

9. The device as set forth in any one of the preceding claims, wherein the first chamber further includes a front wall, a back wall, and a shearing device, the shearing device having a first cutting member rotatable about a third axis, and a second cutting member fixedly mounted to one of either the first, second, front or back walls of the first chamber, the second cutting member having a sliding surface exposed to the respective one of the first, second, front or back wall of the first chamber, the first cutting member configured to slidingly engage the sliding surface of the second cutting member upon rotation about the third axis.

10. The device as set forth in any one of the preceding claims, further including a cleaning mechanism, the cleaning mechanism disposed in the first chamber, the cleaning mechanism operable to facilitate the removal of refuse from the grinding mechanism.

11. The device as set forth in any one of the preceding claims, further including one or both of: (a) a distributing mechanism, the distributing mechanism disposed in the first chamber, the distributing mechanism operable to introduce a composting accelerant onto the refuse to facilitate the composting process, optionally by including a second cartridge containing the compost accelerant, a pump operable to eject the compost accelerant from the second cartridge; (b) a dispensing mechanism operable to dispense a curing agent into the second chamber.

12. The device as set forth in claim 11, further including a sensor operable to detect an introduction of ground refuse into the second chamber and a processor in communication with the sensor, the processor actuating the dispensing mechanism when the sensor detects the introduction of ground refuse into the second chamber.

13. The device as set forth in any one of the preceding claims, further including an agitator disposed in the second chamber, the agitator operable to stir the ground refuse so as to facilitate aeration of the ground refuse and the compost process.

14. The device as set forth in any one of the preceding claims, further including a plurality of curing containers disposed within the second chamber, each of the plurality of curing containers movable to a ready position wherein the curing container is positioned to receive ground refuse, optionally wherein each of the plurality of curing containers are removably disposed within the second chamber.

15. The device as set forth in any one of the preceding claims, further including a storage container having a storage space configured to hold a discrete amount of refuse, the first chamber including an opening, the storage container configured to fittingly mount onto the opening of the first chamber.
